# FASCICULE DE BREVET EUROPEEN

(11) **EP 4 038 873 B1**
(45) Date de publication et mention de la délivrance du brevet: **25.06.2025**
(21) Numéro de dépôt: 20780701.7
(22) Date de dépôt: 30.09.2020
(51) Int. Cl.: H04N 9/31, B60Q 1/14, B60Q 1/06

(54) **PROCEDE D'ADAPTATION DE CONSIGNES POUR UNE UNITE D'ECLAIRAGE NUMERIQUE D'UN VEHICULE AUTOMOBILE**
VERFAHREN ZUR ANPASSUNG VON SOLLWERTEN FÜR EINE DIGITALE BELEUCHTUNGSEINHEIT EINES KRAFTFAHRZEUGES
METHOD FOR ADAPTING SETPOINTS FOR A DIGITAL LIGHTING UNIT OF A MOTOR VEHICLE

(30) Priorité: 04.10.2019 FR 1911049
(43) Date de publication de la demande: 10.08.2022
(73) Titulaire: Valeo Vision, 93012 Bobigny Cedex (FR)
(72) Inventeur: KANJ, Ali, 93012 BOBIGNY Cedex (FR); PRAT, Constantin, 93012 BOBIGNY Cedex (FR); ALMEHIO, Yasser, 93012 BOBIGNY Cedex (FR); EL IDRISSI, Hafid, 93012 BOBIGNY Cedex (FR)
(74) Mandataire: Valeo Visibility
(86) Numéro de dépôt international: PCT/EP2020/077293
(87) Numéro de publication internationale: WO 2021/063982

(56) Documents cités:
- US-A1- 2019 116 345
- US-A1- 2019 264 885
- US-B1- 6 456 340
- M.S. BROWN ET AL: "Image Pre-Conditioning for Out-of-Focus Projector Blur", CONFERENCE ON COMPUTER VISION AND PATTERN RECOGNITION, 2006 IEEE COMPUTER SOCIETY , NEW YORK, NY, USA 17-22 JUNE 2006, vol. 2, 1 January 2006 (2006-01-01), Piscataway, NJ, USA, pages 1956 - 1963, XP055538875, ISBN: 978-0-7695-2597-6, DOI: 10.1109/CVPR.2006.145

## Description

L'invention se rapporte aux modules d'éclairage pour véhicules automobiles. En particulier, l'invention se rapporte à des procédés de commande pour de tels modules impliquant des sources lumineuses matricielles.

Une diode électroluminescente, LED, est un composant électronique semi-conducteur capable d'émettre de la lumière lorsqu'il est parcouru par un courant électrique ayant au moins une intensité seuil. Dans le domaine automobile, on a de plus en plus recours à la technologie LED pour diverses solutions de signalisation lumineuse. Des matrices de LED sont particulièrement intéressantes dans le domaine de l'éclairage automobile. Des sources lumineuses matricielles peuvent être utilisées pour des fonctions de type « levelling », i.e., ajustement de la hauteur du faisceau lumineux émis, en fonction de l'assiette du véhicule et du profil de la route. D'autres applications comprennent le DBL (« Digital Bending Light ») ce qui correspond à l'ajustement de la direction du faisceau lumineux émis, pour suivre la route dans le plan horizontal, l'ADB (« Adaptive Driving Beam ») qui correspond à une fonction anti-éblouissement qui génère des zones d'ombre dans le faisceau lumineux émis par un feu de route pour ne pas gêner d'autres usagers de la route, mais aussi des fonctions de projection de motifs au sol utilisant le faisceau lumineux pixellisé. Les contours des zones d'ombres doivent être bien définies et reproductibles par un dispositif d'éclairage afin de satisfaire à la réglementation en vigueur.

Il est connu d'utiliser des sources lumineuses de différents types de technologies pour les applications d'éclairage citées. Il s'agit par exemple de la technologie monolithique, suivant laquelle une pluralité importante de sources élémentaires de type LED, équivalentes à des pixels, sont gravées dans un substrat semi-conducteur commun. Des connexions électriques intégrées permettent d'activer les pixels indépendamment les uns des autres. Une autre technologie connue est celle des microLED, qui engendre une matrice de LEDs de faibles dimensions, typiquement inférieures à 150µm. Il existe aussi des modules de type à micro-miroirs, DMD (« Digital Micro-Mirror Device »), qui impliquent une technologie de projection utilisant un modulateur d'intensité sur un faisceau uniforme. Des micro-miroirs, dont la position est commandée moyennant des éléments piézo-électriques, sont orientés de manière à réfléchir sélectivement un faisceau lumineux incident, de manière à ce que chaque micro-miroir corresponde à une source élémentaire de la matrice de pixels ainsi générée. La lumière issue d'une source est dirigée sur la matrice de micro-miroirs par une optique.

La lumière émise par une source lumineuse matricielle passe à travers une optique comprenant au moins une lentille optique, pour projeter le contour désiré devant le véhicule automobile. Cependant, pour une source lumineuse matricielle donnée et un système optique de sortie associé, la réponse des sources lumineuse élémentaires de la matrice à travers le système optique n'est pas homogène. Typiquement une zone centrale est apte à projeter à une résolution élevée, tandis que la résolution décroit progressivement aux abords du champ de vue de la source lumineuse, qui peut d'autant plus avoir une ouverture importante de l'ordre de 35°. La projection de contours précis dans des zones de résolution moindres (i.e. aux bords du champ de vu) est donc difficile voire impossible en utilisant des solutions connues. Le résultat de la projection d'un contour ou d'un motif précis dans une telle zone est généralement un contour ou un motif flouté ou bien déformé.

L'invention a pour objectif de pallier à au moins un des problèmes posés par l'art antérieur. En particulier, l'invention a pour objectif de proposer un procédé qui puisse augmenter la précision de motifs ou de contours projetés moyennant une source lumineuse matricielle et un système optique associé, sans pour autant avoir recours à un système optique plus complexe ou onéreux.

Selon un premier aspect de l'invention, un procédé d'adaptation d'une consigne numérique d'éclairage destinée à être projetée par une unité d'éclairage numérique d'un véhicule automobile est proposé. L'unité d'éclairage comprend une source lumineuse matricielle et un système optique. Le procédé est remarquable en ce qu'il comprend une étape d'application, moyennant une unité de calcul, d'un filtrage numérique à la consigne numérique avant de relayer la consigne numérique filtrée à l'unité d'éclairage. Le filtrage numérique anticipe des aberrations géométriques induites par ledit système optique lors de la projection d'une consigne numérique.

De préférence, la consigne numérique d'éclairage peut comprendre une consigne d'intensité lumineuse élémentaire pour chaque source lumineuse élémentaire de la source lumineuse matricielle. Le filtrage numérique peut de préférence comprendre une réduction sélective des consignes d'intensité lumineuses élémentaires selon des valeurs de filtrage de consignes élémentaires prédéterminées.

Ledit filtrage comprend l'application d'un filtre numérique dédié pour chacune des consignes lumineuses élémentaires, ledit filtre numérique dédié anticipant les aberrations géométriques induites par ledit système optique sur les pixels projetés qui font partie d'un voisinage spatial du pixel projeté correspondant à ladite consigne lumineuse élémentaire.

Le voisinage d'un pixel peut par exemple couvrir un nombre prédéterminé de pixels entourant ce pixel. Alternativement, il peut couvrir tous les pixels dans un cercle de rayon prédéterminé.

De préférence, ledit filtrage peut comprendre l'application d'un filtre numérique dédié pour chaque colonne ou ligne de consignes lumineuses élémentaires, ledit filtre numérique dédié anticipant les aberrations géométriques induites par ledit système optique sur les colonnes ou lignes de pixels projetées qui font partie du voisinage spatial de la colonne ou ligne de pixels projetée correspondant à ladite colonne ou ligne de consignes lumineuses élémentaires.

La consigne d'éclairage peut de préférence comprendre une image numérique ayant une résolution au moins égale à la résolution de projection du dispositif d'éclairage.

De préférence, le procédé peut comprendre les étapes préalables pour chaque source lumineuse élémentaire de la source lumineuse matricielle :
i) déterminer la distribution spatiale lumineuse du pixel projeté à travers le système optique lorsque la source lumineuse élémentaire est commandée à émettre à un rendement maximal ;
ii) déterminer, moyennant un calculateur, un facteur ou une valeur de réduction du rendement maximal tel que le rendement d'émission réduit produise une distribution lumineuse spatiale qui illumine les pixels du voisinage du pixel projeté au maximum à un degré de luminosité prédéterminé ;
iii) associer le facteur ou la valeur de réduction à la position de ladite source lumineuse dans la source lumineuse matricielle, et l'enregistrer dans un élément de mémoire comme valeur de filtrage de consigne élémentaire pour une consigne élémentaire correspondante.

Les étapes préalables i)-iii) peuvent de préférence être réalisées une fois pour chaque ligne ou colonne de sources lumineuses élémentaires.

Selon un autre aspect de l'invention, un dispositif d'éclairage pour un véhicule automobile est proposé. Le dispositif d'éclairage comprend une unité d'éclairage numérique ayant une source lumineuse matricielle composée de sources lumineuses élémentaires ainsi qu'un système optique. Le dispositif comprenant en outre une unité de réception de données destinée à recevoir une consigne d'éclairage. Le dispositif d'éclairage est remarquable en ce qu'il comprend une unité de calcul configurée pour adapter une consigne d'éclairage reçue conformément à un procédé selon un aspect de l'invention. Le dispositif d'éclairage comprend en outre une unité de commande destinée à commander l'unité d'éclairage en accord avec la consigne d'éclairage filtrée.

De préférence, l'unité de commande et/ou l'unité de calcul peuvent comprendre un élément microcontrôleur ou un processeur de données programmé moyennant un programme informatique approprié pour réaliser ledit procédé.

L'agencement du système optique peut de préférence être tel que la lumière émise par les sources lumineuses élémentaires de l'unité d'éclairage le traverse. Le système optique peut de préférence comprendre au moins une lentille optique

L'unité de réception de données peut de préférence comprendre une interface réseau capable de recevoir / envoyer des données sur un bus de données interne au véhicule automobile. Par exemple, le bus peut être un bus de type « Controller Area Network », CAN, Ethernet, un bus de type Gigabit Multimedia Serial Link, GMSL, ou un bus de technologie Low Voltage Differential Signaling, LVDS, comme un bus FPD-Link III.

La source lumineuse matricielle peut de préférence comprendre une source monolithique, comprenant des sources lumineuses élémentaires électroluminescentes à éléments semi-conducteurs gravées dans un substrat commun et activables indépendamment les unes des autres.

La source lumineuse matricielle peut de préférence comprendre une matrice de type micro LED, comprenant une matrice de sources élémentaires réalisées par des diodes électroluminescentes, LED, de faibles dimensions, typiquement inférieures à 150 µm.

La source lumineuse matricielle peut de préférence comprendre un dispositif à micro-miroirs, DMD, (« Digital Micromirror Device »), dans lequel une source élémentaire comprend un micro-miroir d'une matrice, qui réfléchit de manière sélective en fonction de sa position un faisceau de lumière incident.

Selon encore un autre aspect de l'invention, un programme d'ordinateur comprenant une suite d'instructions est proposé, qui, lorsqu'elles sont exécutées par un processeur, conduisent le processeur à mettre en œuvre un procédé selon un aspect de l'invention.

Selon un autre aspect de l'invention, un support de stockage non transitoire lisible par ordinateur est proposé, ledit support stockant un programme d'ordinateur selon l'aspect précédent de l'invention.

En utilisant les aspects selon l'invention, il devient possible d'anticiper de manière préemptive des aberrations géométriques induites à une image projetée par un système optique (tels que des déformations ou floutages). Ceci est réalisé en utilisant un procédé numérique, implémenté de préférence par un logiciel informatique. La solution ne nécessite donc pas d'avoir recours à des optiques plus onéreuses qui engendreraient moins de déformations. Cette approche permet de maintenir le coût de production du dispositif d'éclairage proposé relativement stable, tout en améliorant nettement son comportement optique. Cette amélioration est d'autant plus utile lorsque le dispositif d'éclairage réalise une fonction de type « Adaptive Driving Beam », ADB, qui requiert la projection des contours et motifs précis, tout en nécessitant une luminosité moins importante.

D'autres caractéristiques et avantages de la présente invention seront mieux compris à l'aide de la description des exemples et des dessins parmi lesquels :
- la Fig. 1 est une illustration d'un procédé en accord avec un mode de réalisation préférentiel de l'invention ;
- la Fig. 2 est une illustration de la distribution lumineuse spatiale d'un pixel projeté par une unité d'éclairage en accord avec un mode de réalisation préférentiel de l'invention ;
- la Fig. 3 est une illustration schématisée d'un dispositif d'éclairage en accord avec un mode de réalisation préférentiel de l'invention.

Sauf indication spécifique du contraire, des caractéristiques techniques décrites en détail pour un mode de réalisation donné peuvent être combinées aux caractéristiques techniques décrites dans le contexte de d'autres modes de réalisation décrits à titre d'exemples et de manière non limitative.

La description se concentre sur les éléments d'un module d'éclairage, pour un véhicule automobile, qui sont nécessaires à la compréhension de l'invention. D'autres éléments, qui font de manière connue partie de tels modules, ne seront pas mentionnées ni décrits en détails. Par exemple, la présence et le fonctionnement d'un circuit convertisseur impliqué dans l'alimentation électrique d'une source lumineuse matricielle, en soi connu, ne sera pas décrit en détails.

Une source lumineuse matricielle peut engendrer un nombre important de sources lumineuses élémentaires, par exemple plusieurs milliers de sources lumineuses électroluminescentes à élément semi-conducteur, de type LED. Une telle source lumineuse peut couvrir un champ de vue important, de l'ordre de 35°. Dans un dispositif d'éclairage pour un véhicule automobile, un système optique comprenant au moins une lentille optique est typiquement associé à une telle source lumineuse matricielle. Typiquement la partie centrale d'une image projetée présente une résolution élevée, tandis que les régions en bord d'image présentent une résolution dégradée. Il a été observé que dans une zone centrale à haute définition (correspondant à environ -11° à 11° d'ouverture), la lumière émise par une source élémentaire produit un pixel projeté, et contribue également à la luminosité d'environ deux pixels avoisinants. La lumière émise par une source élémentaire dans une zone moyenne (correspondant à environ +/- 11 à 14) produit un pixel projeté, et contribue également à la luminosité d'environ quatre pixels avoisinants. Dans une zone en bordure à basse résolution, la lumière émise d'une unique source élémentaire produit un pixel projeté, et contribue en même temps à la luminosité d'environ huit pixels dans son voisinage. La distribution spatiale de la lumière émise par une source élémentaire de la source lumineuse matricielle n'est donc pas homogène pour toutes les sources élémentaires qui composent la source lumineuse matricielle, mais elle dépend de l'emplacement de la source élémentaire par rapport au système optique, même si les caractéristiques des sources élémentaires sont autrement équivalentes. Il a également été observé que la distribution spatiale de la lumière émise par une source lumineuse élémentaire dépend de son rendement de fonctionnement : à 100% de rendement (toujours allumé), la lumière produite est susceptible de contribuer à l'illumination d'un nombre plus important de pixels avoisinants qu'à un rendement moindre. Un effet de floutage du faisceau lumineux projeté ou d'aberration géométrique induit par le système optique peut par conséquent être au moins partiellement contrecarré en réduisant l'intensité lumineuse d'une source lumineuse élémentaire. Le rendement d'une source lumineuse de type diode électroluminescente peut de manière connue être influencé en pilotant son alimentation en courant électrique moyennant un signal de type modulation de largeur d'impulsion (« pulse width modulation », PWM), qui se caractérise par un rapport cyclique représentatif du rendement désiré. L'invention utilise ses observations pour la mise en œuvre d'un procédé qui limite les aberrations optiques engendrées par l'unité d'éclairage.

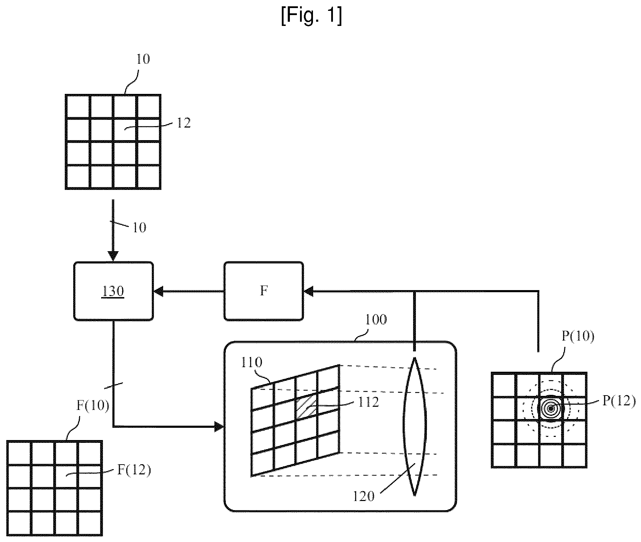

L'illustration de la figure 1 montre la mise à disposition d'une consigne numérique d'éclairage 10 destinée à être projetée par une unité d'éclairage numérique 100. La consigne numérique comprend par exemple une image dont chaque pixel 12 comprend une valeur d'intensité lumineuse, qui doit idéalement être reproduite par une source lumineuse élémentaire correspondante 112 d'une source lumineuse matricielle 110 de l'unité d'éclairage numérique 100. La source matricielle 110 peut comprendre une source monolithique, un dispositif digital à micro-miroirs ou d'autres sources lumineuse matricielles connues dans l'art. L'unité d'éclairage numérique 100 comprend également un système optique comprenant au moins une lentille optique 120, arrangé en aval de la source lumineuse matricielle, suivant la direction de la lumière émise. Une unité de calcul 130, tel qu'un processeur ou un élément microcontrôleur programmé à cet effet, applique un filtrage numérique F à la consigne numérique 10 d'origine, produisant ainsi une consigne numérique filtrée F(10). Cette dernière est relayée à l'unité d'éclairage et finalement projetée moyennant la source lumineuse matricielle 110 et le système optique. Le résultat est une image projetée P(10). L'étape de filtrage permet d'anticiper des aberrations géométriques induites par le système optique 120. Il est à noter qu'un pixel projeté P(12) correspond à une distribution spatiale de lumière, ayant une intensité maximale au centre et une allure décroissante en cloche dans son voisinage. Le filtre F dépend de la distribution générée pour chaque source lumineuse élémentaire 112 par le système optique 120.

Selon un mode de réalisation préférentiel de l'invention, la valeur de chaque pixel 12 de la consigne d'origine 10 est adaptée par l'unité de calcul 130 suivant un facteur ou une valeur de réduction prédéterminée faisant partie des données du filtre F. Chacune de ces valeurs de filtrage de consigne élémentaires est choisie de manière à limiter l'impact de la distribution spatiale de lumière émise pour un pixel donné P(12) sur ses pixels voisins. Selon un mode de réalisation préféré, le comportement horizontal d'une source matricielle est quasiment homogène. Dans un tel cas, une valeur de filtrage de consigne élémentaire est choisie pour chaque colonne de la consigne d'origine 10, limitant ainsi les besoins de calcul de l'unité de calcul 130.

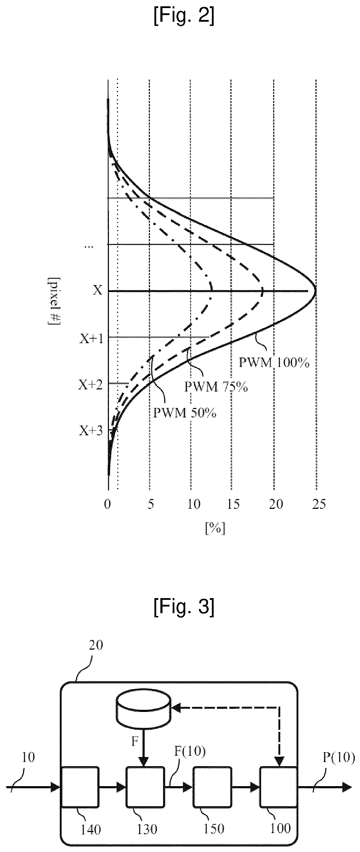

La figure 2 montre comment les valeurs de filtrage de consigne élémentaires sont obtenues selon un mode de réalisation préférentiel, sans pour autant que l'invention ne se limite à cet exemple. L'axe vertical montre des références de pixels ou de manière équivalentes de sources / colonnes de sources lumineuses élémentaires. L'axe horizontal montre un pourcentage de luminosité par rapport à une intensité maximale de normalisation. On considère ici le pixel d'indice X. Lorsque la source lumineuse X fonctionne à un rapport cyclique de 100%, l'aire sous la courbe « PWM 100% » représente l'intégralité de la lumière émise, tandis que l'allure de la courbe montre la distribution spatiale de cette émission. Les valeurs indiquées pour les pixels/colonnes voisines X+1 (12%), X+2 (4%), X+3 (0%, rehaussé à un minimum de 1% représentée en pointillés) représentent des valeurs seuils de luminosité prédéterminés que la distribution lumineuse spatiale du pixel X doit respecter pour garantir une projection à aberrations géométriques réduites. Ces valeurs peuvent être déterminées soit empiriquement par des mesures précises, soit par des méthodes de simulation par ordinateur. Elles dépendent de la source lumineuse matricielle utilisée, des caractéristiques des sources lumineuses élémentaires, ainsi que du système optique utilisé.

Il devient apparent qu'une consigne équivalente à 100% de luminosité pour la source lumineuse élémentaire d'indice X implique des niveaux de luminosités trop élevés pour tous les pixels avoisinants. Afin de respecter l'intégralité des contraintes imposées, un rendement de 50% doit être appliqué au pixel d'indice X, si la consigne d'origine indique 100%. Le poids correspondant de 0.5 est enregistré dans un élément de mémoire comme valeur de filtrage de consigne élémentaire pour chaque consigne d'indice X. Les valeurs de filtrage peuvent être affinées pour d'autres intensités du pixel d'indice X. Ce procédé est réalisé une fois, pour toutes les sources lumineuses élémentaires, ou pour toutes les colonnes de sources élémentaires. Le procédé produit les valeurs de filtrage F pour l'unité d'éclairage en question. Il est à noter que les valeurs de filtrage de consigne élémentaires ne sont pas homogènes pour toutes les sources lumineuses élémentaires, puisque leur emplacement par rapport au système optique 120 a un impact majeur sur la distribution lumineuse qu'elles produisent.

Une fois que tous ces poids ou valeurs de filtrage de consigne élémentaires ont été identifiées, l'étape d'application du filtre est de préférence mis en œuvre par l'algorithme suivant :
pour tous les pixels i, j de la consigne d'origine:

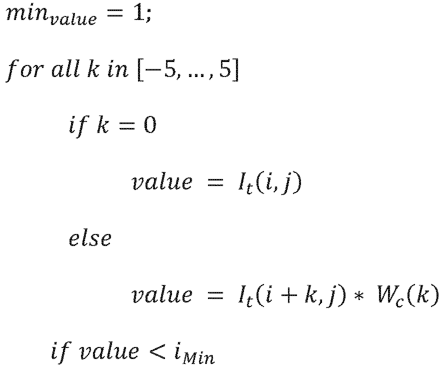

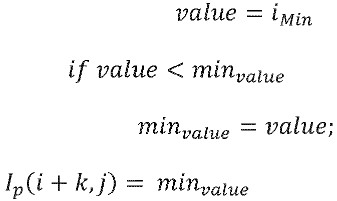

Dans lequel *Iₜ* représente la consigne d'origine 10, *Iₚ* représente la consigne filtrée F(10), *W_{c}* est le vecteur des poids de filtrage de la colonne "c", et *iₘᵢₙ* est une valeur seuil inférieure qui évite que l'algorithme finit par mettre toutes les intensités à 0. La valeur *minᵥₐₗᵤₑ* permet de retenir le pire cas parmi tous les pixels voisins, c'est-à-dire le pixel voisin le plus impacté par le pixel X. Dans l'exemple donné, pour un pixel donné, 10 colonnes avoisinantes sont adaptées par l'algorithme, puisque 10 colonnes sont susceptibles d'être impactées par la distribution spatiale de la lumière émise par ce pixel donné. Il va de soi que ces données sont à adapter selon l'application et les caractéristiques des sources lumineuses/systèmes optiques considérés, sans pour autant sortir du cadre de la présente invention.

La figure 3 montre de manière schématisée un dispositif d'éclairage 20 conforme à un mode de réalisation préférentiel de l'invention. Il comprend une unité d'éclairage numérique 100 ayant une source lumineuse matricielle composée de sources lumineuses élémentaires ainsi qu'un système optique. Une unité de réception de données 140 est apte à recevoir une consigne d'éclairage 10, sous la forme d'une image numérique sur un bus de données d'un véhicule automobile. Typiquement la consigne est en provenance d'un module de commande central du véhicule. Le dispositif comprend un élément microcontrôleur 130 configuré pour adapter chaque consigne d'éclairage reçue 10 en accord avec le procédé qui vient d'être décrit. Le dispositif comprend en outre une unité de commande 150 destinée à commander l'unité d'éclairage 100 en accord avec la consigne d'éclairage filtrée F(10). Pour ce faire, le rapport cyclique d'un signal de commande à modulation de largeur d'impulsion est de préférence adapté de manière à refléter les valeurs de consignes filtrées F(10).

Il va de soi que les modes de réalisation décrits ne limitent pas l'étendue de la protection de l'invention. En faisant recours à la description qui vient d'être donnée, d'autres modes de réalisation sont envisageables sans pour autant sortir du cadre de la présente invention.

L'étendue de la protection est déterminée par les revendications.

## Revendications

1. Procédé d'adaptation d'une consigne numérique d'éclairage (10) destinée à être projetée par une unité d'éclairage numérique (100) d'un véhicule automobile, comprenant une source lumineuse matricielle (110) et un système optique (120), **caractérisé en ce que** le procédé comprend une étape d'application, moyennant une unité de calcul (130), d'un filtrage numérique (F) à la consigne numérique (10) avant de relayer la consigne numérique filtrée (F(10)) à l'unité d'éclairage (100), ledit filtrage numérique (F) anticipant des aberrations géométriques induites par ledit système optique (120) lors de la projection P(10) d'une consigne numérique, **caractérisé en ce que** ledit filtrage (F) comprend l'application d'un filtre numérique dédié pour chacune des consignes lumineuses élémentaires (12), ledit filtre numérique dédié anticipant les aberrations géométriques induites par ledit système optique (120) sur les pixels projetés qui font partie d'un voisinage spatial du pixel projeté P(12) correspondant à ladite consigne lumineuse élémentaire (12).

2. Procédé selon la revendication 1, **caractérisé en ce que** la consigne numérique d'éclairage (10) comprend une consigne d'intensité lumineuse élémentaire (12) pour chaque source lumineuse élémentaire (112) de la source lumineuse matricielle (110), et **en ce que** le filtrage numérique comprend une réduction sélective des consignes d'intensité lumineuses élémentaires (12) selon des valeurs de filtrage de consignes élémentaires (F) prédéterminées.

3. Procédé selon une des revendications 1 ou 2, **caractérisé en ce que** ledit filtrage (F) comprend l'application d'un filtre numérique dédié pour chaque colonne ou ligne de consignes lumineuses élémentaires (12), ledit filtre numérique dédié anticipant les aberrations géométriques induites par ledit système optique (120) sur les colonnes ou lignes de pixels projetées qui font partie du voisinage spatial de la colonne ou ligne de pixels projetée correspondant à ladite colonne ou ligne de consignes lumineuses élémentaires.

4. Procédé selon une des revendications 1 à 3, **caractérisé en ce que** la consigne d'éclairage comprend une image numérique ayant une résolution au moins égale à la résolution de projection du dispositif d'éclairage.

5. Procédé selon une des revendications 1 à 4, **caractérisé en ce qu'**il comprend les étapes préalables pour chaque source lumineuse élémentaire (112) de la source lumineuse matricielle (110):
iv. déterminer la distribution spatiale lumineuse P(12) du pixel projeté à travers le système optique (120) lorsque la source lumineuse élémentaire (112) est commandée à émettre à un rendement maximal ;
v. déterminer, moyennant un calculateur, un facteur ou une valeur de réduction du rendement maximal tel que le rendement d'émission réduit produit une distribution lumineuse spatiale qui illumine les pixels du voisinage du pixel projeté P(12) au maximum à un degré de luminosité prédéterminé ;
vi. associer le facteur ou la valeur de réduction à la position de ladite source lumineuse (112) dans la source lumineuse matricielle (110), et l'enregistrer dans un élément de mémoire comme valeur de filtrage de consigne élémentaire (F) pour une consigne élémentaire correspondante (12).

6. Procédé selon la revendication 5, **caractérisé en ce que** les étapes préalables sont réalisées une fois, pour chaque ligne ou colonne de sources lumineuses élémentaires.

7. Dispositif d'éclairage (20) pour un véhicule automobile comprenant une unité d'éclairage numérique (100) ayant une source lumineuse matricielle (110) composée de sources lumineuses élémentaires (112) ainsi qu'un système optique (120), le dispositif (20) comprenant en outre une unité de réception de données (140) destinée à recevoir une consigne d'éclairage (10), **caractérisé en ce que** le dispositif comprend une unité de calcul (130) configurée pour adapter une consigne d'éclairage reçue (10) en accord avec le procédé selon une des revendications 1 à 6, le dispositif comprenant en outre une unité de commande (150) destinée à commander l'unité d'éclairage (100) en accord avec la consigne d'éclairage filtrée F(10).

8. Programme d'ordinateur comprenant une suite d'instructions qui, lorsqu'elles sont exécutées par un processeur, conduisent le processeur à mettre en œuvre un procédé selon une des revendications 1 à 6.

9. Support de stockage non transitoire lisible par ordinateur, ledit support stockant un programme d'ordinateur selon la revendication 8.

## Patentansprüche

1. Verfahren zur Anpassung eines digitalen Beleuchtungsbefehls (10), der dazu bestimmt ist, durch eine digitale Beleuchtungseinheit (100) eines Kraftfahrzeugs, die eine Matrixlichtquelle (110) und ein optisches System (120) beinhaltet, projiziert zu werden, **dadurch gekennzeichnet, dass** das Verfahren einen Schritt des Anwendens, mittels einer Recheneinheit (130), einer digitalen Filterung (F) auf den digitalen Befehl (10) beinhaltet, bevor der gefilterte digitale Befehl (F(10)) an die Beleuchtungseinheit (100) weitergeleitet wird, wobei die digitale Filterung (F) geometrische Aberrationen antizipiert, die durch das optische System (120) bei der Projektion P(10) eines digitalen Befehls hervorgerufen werden, **dadurch gekennzeichnet, dass** die Filterung (F) das Anwenden eines dedizierten digitalen Filters für jeden der elementaren Lichtbefehle (12) beinhaltet, wobei das dedizierte digitale Filter die geometrischen Aberrationen antizipiert, die durch das optische System (120) an den projizierten Pixeln hervorgerufen werden, welche zu einer räumlichen Nachbarschaft des projizierten Pixels P(12), das dem elementaren Lichtbefehl (12) entspricht, gehören.

2. Verfahren nach Anspruch 1, **dadurch gekennzeichnet, dass** der digitale Beleuchtungsbefehl (10) einen elementaren Lichtstärkebefehl (12) für jede elementare Lichtquelle (112) der Matrixlichtquelle (110) beinhaltet und dass die digitale Filterung eine selektive Reduzierung der elementaren Lichtstärkebefehle (12) gemäß vorbestimmten Filterungswerten (F) für elementare Befehle beinhaltet.

3. Verfahren nach einem der Ansprüche 1 oder 2, **dadurch gekennzeichnet, dass** die Filterung (F) das Anwenden eines dedizierten digitalen Filters für jede Spalte oder Zeile von elementaren Lichtbefehlen (12) beinhaltet, wobei das dedizierte digitale Filter die geometrischen Aberrationen antizipiert, die durch das optische System (120) an den Spalten oder Zeilen von projizierten Pixeln hervorgerufen werden, welche zu der räumlichen Nachbarschaft der projizierten Spalte oder Zeile von Pixeln, die der Spalte oder Zeile von elementaren Lichtbefehlen entspricht, gehören.

4. Verfahren nach einem der Ansprüche 1 bis 3, **dadurch gekennzeichnet, dass** der Beleuchtungsbefehl ein digitales Bild beinhaltet, das eine Auflösung aufweist, die mindestens gleich der Projektionsauflösung der Beleuchtungsvorrichtung ist.

5. Verfahren nach einem der Ansprüche 1 bis 4, **dadurch gekennzeichnet, dass** es für jede elementare Lichtquelle (112) der Matrixlichtquelle (110) die folgenden Vorabschritte beinhaltet:
iv. Bestimmen der räumlichen Lichtverteilung P(12) des durch das optische System (120) hindurch projizierten Pixels, wenn die elementare Lichtquelle (112) gesteuert wird, um eine maximale Leistung abzugeben;
v. Bestimmen, mittels eines Rechners, eines Faktors oder eines Werts zur Reduzierung der maximalen Leistung, sodass die reduzierte Abgabeleistung eine räumliche Lichtverteilung produziert, die die Pixel der Nachbarschaft des projizierten Pixels P(12) maximal mit einem vorbestimmten Helligkeitsgrad illuminiert;
vi. Assoziieren des Reduzierungsfaktors oder -werts mit der Position der Lichtquelle (112) in der Matrixlichtquelle (110) und Aufzeichnen desselben in einem Speicherelement als elementaren Befehlsfilterungswert (F) für einen entsprechenden elementaren Befehl (12).

6. Verfahren nach Anspruch 5, **dadurch gekennzeichnet, dass** die Vorabschritte einmalig für jede Zeile oder Spalte von elementaren Lichtquellen durchgeführt werden.

7. Beleuchtungsvorrichtung (20) für ein Kraftfahrzeug, die eine digitale Beleuchtungseinheit (100) beinhaltet, die eine Matrixlichtquelle (110), die aus elementaren Lichtquellen (112) besteht, sowie ein optisches System (120) aufweist, wobei die Vorrichtung (20) ferner eine Datenempfangseinheit (140) beinhaltet, die dazu bestimmt ist, einen Beleuchtungsbefehl (10) zu empfangen, **dadurch gekennzeichnet, dass** die Vorrichtung eine Recheneinheit (130) beinhaltet, die dazu konfiguriert ist, einen empfangenen Beleuchtungsbefehl (10) gemäß dem Verfahren nach einem der Ansprüche 1 bis 6 anzupassen, wobei die Vorrichtung ferner eine Steuereinheit (150) beinhaltet, die dazu bestimmt ist, die Beleuchtungseinheit (100) gemäß dem gefilterten Beleuchtungsbefehl F(10) zu steuern.

8. Computerprogramm, das eine Folge von Anweisungen beinhaltet, die bei Ausführung durch einen Prozessor bewirken, dass der Prozessor ein Verfahren nach einem der Ansprüche 1 bis 6 umsetzt.

9. Nicht transitorisches, computerlesbares Speichermedium, wobei das Medium ein Computerprogramm nach Anspruch 8 speichert.

## Claims

1. A method for adapting a digital lighting setpoint (10) intended to be projected by a digital lighting unit (100) of a motor vehicle, comprising a matrix light source (110) and an optical system (120), **characterized in that** the method comprises a step of applying, by way of a computing unit (130), digital filtering (F) to the digital setpoint (10) before relaying the filtered digital setpoint (F(10)) to the lighting unit (100), said digital filtering (F) anticipating geometric aberrations induced by said optical system (120) during the projection P(10) of a digital setpoint, **characterized in that** the said filtering (F) comprises applying a dedicated digital filter for each of the elementary light setpoints (12), said dedicated digital filter anticipating the geometric aberrations induced by said optical system (120) on the projected pixels that form part of a spatial neighborhood of the projected pixel P(12) corresponding to said elementary light setpoint (12).

2. The method as claimed in claim 1, **characterized in that** the digital lighting setpoint (10) comprises an elementary light intensity setpoint (12) for each elementary light source (112) of the matrix light source (110), and **in that** the digital filtering comprises selectively reducing the elementary light intensity setpoints (12) in accordance with predetermined elementary setpoint filtering values (F).

3. The method according to one of claims 1 or 2, **characterized in that** said filtering (F) comprises applying a dedicated digital filter for each column or row of elementary light setpoints (12), said dedicated digital filter anticipating the geometric aberrations induced by said optical system (120) on the projected columns or rows of pixels that form part of the spatial neighborhood of the projected column or row of pixels corresponding to said column or row of elementary light setpoints.

4. The method as claimed in one of claims 1 to 3, **characterized in that** the lighting setpoint comprises a digital image having a resolution at least equal to the projection resolution of the lighting device.

5. The method as claimed in one of claims 1 to 4, **characterized in that** it comprises the following preliminary steps for each elementary light source (112) of the matrix light source (110):
i. determining the spatial light distribution P(12) of the pixel projected through the optical system (120) when the elementary light source (112) is controlled so as to emit at a maximum output;
ii. determining, by way of a computer, a reduction factor or value of the maximum output, such that the reduced emission output produces a spatial light distribution that illuminates the pixels in the neighborhood of the projected pixel P(12) at most to a predetermined degree of brightness;
iii) associating the reduction factor or value with the position of said light source (112) in the matrix light source (110), and storing it in a memory element as elementary setpoint filtering value (F) for a corresponding elementary setpoint (12).

6. The method as claimed in claim 5, **characterized in that** the preliminary steps are performed once for each row or column of elementary light sources.

7. A lighting device (20) for a motor vehicle, comprising a digital lighting unit (100) having a matrix light source (110) composed of elementary light sources (112) as well as an optical system (120), the device (20) furthermore comprising a data reception unit (140) intended to receive a lighting setpoint (10), **characterized in that** the device comprises a computing unit (130) configured so as to adapt a received lighting setpoint (10) in accordance with the method as claimed in one of claims 1 to 6, the lighting device furthermore comprising a control unit (150) intended to control the lighting unit (100) in accordance with the filtered lighting setpoint F(10).

8. A computer program comprising a sequence of instructions which, when they are executed by a processor, result in the processor implementing a method as claimed in one of claims 1 to 6.

9. A non-transitory computer-readable storage medium, said medium storing a computer program as claimed in claim 8.
